# EUROPEAN PATENT SPECIFICATION

(11) **EP 3 030 049 B1**
(45) Date of publication and mention of the grant of the patent: **24.10.2018**
(21) Application number: 14195669.8
(22) Date of filing: 01.12.2014
(51) Int. Cl.: H05B 33/08

(54) **LED controllers, drivers and lighting circuits**
LED-Steuerungen, Treiber und Beleuchtungsschaltungen
Contrôleurs de DEL, conducteurs et circuits d'éclairage

(43) Date of publication of application: 08.06.2016
(73) Proprietor: NXP B.V., 5656 AG Eindhoven (NL)
(72) Inventor: Scott, Michael, Redhill Surrey RH1 1SH (GB)
(74) Representative: Hardingham, Christopher Mark

(56) References cited:
- EP-A1- 2 432 124
- WO-A1-2010/051417
- WO-A2-2006/039790
- DE-A1-102013 204 844
- US-A1- 2011 241 919
- US-A1- 2012 127 210

## Description

### Field

The present disclosure relates to a controllers and drivers for controlling and driving a plurality of LED lighting strings. It further relates to LED lighting strings driven by such controllers and to methods of controlling LED lighting strings.

### Background

To control multiple strings of LED lights - for instance for backlighting applications, or for red-green-blue (RGB) colour variable lighting - it is known to provide pulse-width modulation (PWM) signals to a respective switch for each string, to turn that string on and off: the greater the proportion of the cycle the string is turned on (that is, the higher the 'mark-space ratio', or duty-cycle of the PWM signal), the brighter the light output from the string. In the example case of RGB strings, the colour of the resultant combined light may be varied by altering the duty cycle of one or more of the PWM signals.

Typically such multi-string LED PWM control schemes use a common, fixed, frequency, often in the range of 200 to 400 Hz. Particularly in the case that the PWM switching for these strings is coincident, this can result in significant electromagnetic interference (EMI) since the switching transients occur at the same frequency and may even be coincident. Further, in applications in which a switch mode power supply (SMPS) is used to provide power, the output stage of the switch mode power supply may be stressed, and may produce audible noise at the PWM switching frequency.

It has been proposed to alleviate the EMI by introducing a random PWM control to the switching, such as is proposed in United States patent application, publication number US 2012/0127210 by Huang et al.

International patent application publication number WO2006/039790 discloses a control apparatus and method for use with digitally controlled light sources, being an extension to a standard N-bit digital pulse width control method which can discriminate 2^{N} discrete pulse widths per pulse cycle. Disclosed is a method and apparatus that can modulate the pulse widths over a period of 2^{M} pulse cycles in which each pulse cycle can have its own pulse width or respective duty cycle. The resulting time averaged or effective pulse width therefore can be controlled with a resolution of 2^{N+M} states rather than a resolution of 2^{N} states as is common with standard methods.

German patent application publication number DE10 2013/204844 discloses a method for generating a pulse width modulated signal for controlling an electric motor drive. The duty cycle or the pulse duration is a pulse width modulated signal with randomly varying period length, according to a random number signal. The random variation of the period here is limited to a predetermined range.

### Summary

According to a first aspect of the present invention, there is provided a controller for controlling a plurality of LEDs lighting strings, the controller comprising, for each of the plurality of LED lighting strings: a frequency modulator configured to modulate a baseline frequency to generate a time-varying modulated frequency; wherein the frequency modulator is configured to modulate the baseline frequency by a jitter superposed on a regular repeating pattern which varies more slowly than the jitter, to result in the modulated frequency; and a modulated signal generator configured to generate a modulated PWM signal having the modulated frequency and a predetermined duty cycle; wherein the regular repeating patterns for the PWM signals are spaced apart in phase, and wherein each regular repeating pattern is the same one of a triangular pattern, a sinusoidal pattern and a saw-tooth pattern.

By including a combination of jitter and a regular repeating pattern, it may be possible to reduce the level of randomness, whilst still benefiting from the limited negative correlation between switching of the LED strings. It may thereby be possible, for instance, to mitigate or reduce EMI problems. Furthermore, it may be possible to reduce or mitigate random loading on the power supply, which is generally associated with truly random frequency. Modulating the frequency, but using the predetermined duty cycle may allow the controller to adjust the PWM signals without introducing variation to the average currents, and thus the perceived light output is not directly affected. The baseline frequency and modulated frequency may each be embedded or represented in a respectively signal, or they may be represented as information which is not embedded or encoded in a signal.

In one or more embodiments the jitter is random. Alternatively, in some embodiments it may be possible to include jitter having a quasi-random nature or even a regular periodic pattern.

In one or more embodiments, each frequency modulator comprises: a jitter module configured to adjust the respective baseline frequency by a random amount; and an envelope shaper module configured to adjust the respective baseline frequency according to a regular repeating pattern, operable in combination with the jitter module. This may allow for the same envelope shaper to be used for each of the LED lighting strings, whereas different jitter is applied to each string. In particular in the case that the jitter is random, a separate random number may be generated for each PWM cycle for each of the LED lighting strings.

The regular repeating pattern is one of a triangular, a saw-tooth pattern, and a sinusoidally varying pattern. Some of these will be described below.

In one or more embodiments the envelope shaper is configured to adjust the respective frequency of each PWM signal by the same regular repeating pattern. This may be reduce the complexity of the circuitry, or in the case that the controller is at least partially implemented in software, of the underlying algorithms.

In one or more embodiments the regular repeating pattern for different PWM signals are evenly spaced apart in phase. Thus for a colour LED lighting circuit in which there are, for instance, three LED lighting strings - red, green and blue respectively - the regular repeating pattern for strings may be offset by ±2π/3 from each other.

According to another aspect of the present disclosure, there is provided a driver for driving a plurality of LEDs lighting strings, comprising a controller as described above, and a plurality of power switches, each configured to be switched according to the respective modulated PWM signal.

The driver may further comprise a measuring unit, configured to determine a period of time when none of the modulated PWM signals are high, and to calculate a characteristic of only one of the LED lighting strings within the period. The driver may thus be used in conjunction with sensorless sensing.

According to a yet further aspect of the present disclosure, there is provided a lighting circuit comprising such a driver and further comprising the plurality of LEDs lighting strings.

According to another aspect of the present disclosure, there is provided a method of controlling a plurality of LED lighting strings, the method comprising, for each of the plurality of LED lighting strings: modulating a baseline frequency to generate a time-varying modulated frequency, wherein the baseline frequency is modulated by a jitter superposed on a regular repeating pattern which varies more slowly than the jitter, to result in the modulated frequency; and generating a modulated PWM signal having the modulated frequency and a predetermined duty cycle; wherein the regular repeating patterns for the PWM signals are spaced apart in phase and wherein each regular pattern is the same one of a triangular pattern, a sinusoidal pattern and a saw-tooth pattern.

The jitter may be random. Each regular repeating pattern may be the same regular repeating pattern.

In one or more embodiments, the method may further comprise determining a period of time when none of the modulated PWM signals are high, and measuring a characteristic of a one of the LED lighting strings within the period. These and other aspects of the invention will be apparent from, and elucidated with reference to, the embodiments described hereinafter.

### Brief description of Drawings

Embodiments will be described, by way of example only, with reference to the drawings, in which
figure 1 illustrates an example of a generic mains-supplied multi-string LED lighting circuit;
figure 2(a) shows, in block form, a controller for controlling a plurality of LEDs lighting strings, according to one or more embodiments;
figure 2(b) shows, in block form, a controller for controlling a plurality of LEDs lighting strings, according to one or more embodiments and suitable for digital or software implementation;
figure 3 shows, in block form, another controller for controlling a plurality of LEDs lighting strings, according to one or more embodiments;
figure 4 shows schematically an example of frequency adjustment according to one or more embodiments;
figure 5 shows non-exhaustive examples of alternative regular repeating patterns;
figure 6 shows another example of frequency adjustment;
figure 7 shows a schematic diagram of a circuit for controlling a plurality of LED strings, according to one or more embodiments;
figure 8 shows a schematic diagram of a circuit for controlling a plurality of LED strings, according to one or more embodiments and incorporating a sensorless temperature sensing functionality; and
figure 9 shows a timing diagram for the scheduling of a sensorless temperature sensing measurement.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### Detailed description of embodiments

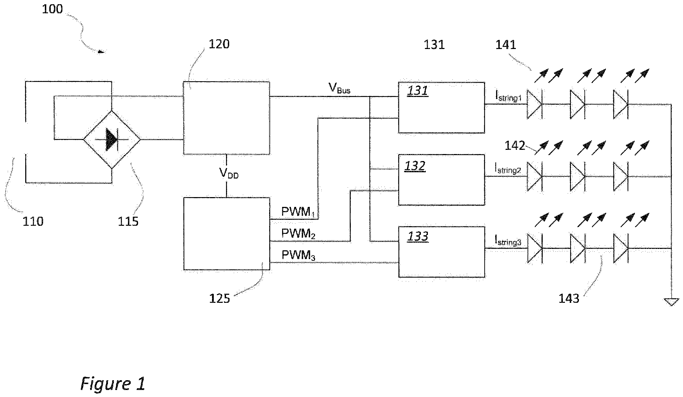

An example of a generic mains-supplied multi-string LED lighting circuit 100 is shown schematically in figure 1. The circuit is powered from an AC mains 110 which is rectified by rectifier 115, and down converted to a suitable drive voltage V_{DD} by a switch mode power supply (SMPS) or DC-DC converter 120. PWM control signals PWM1, PWM2 and PWM3 are produced by a PWM synthesiser, which may, as shown, be implemented in a microcontroller 125. The PWM control signals PWM1, PWM2 and PWM3 are used to control respective LED drivers 131, 132 and 133. The drivers drive respective LED strings 141, 142 and 143 with drive currents I_{string1}, I_{string1} and I_{string1}.

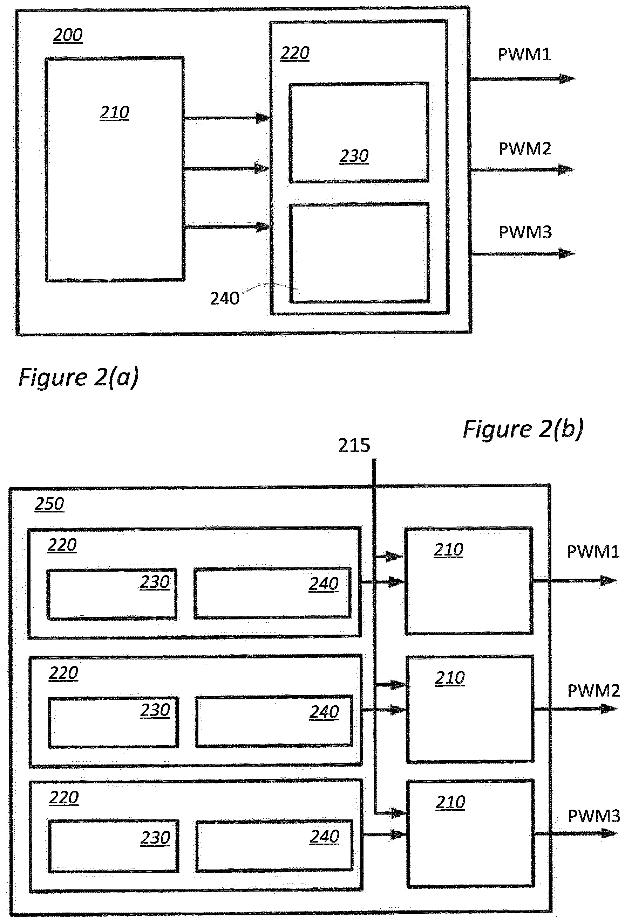

Figure 2(a) shows, in block form, a controller 200 for controlling a plurality of LEDs lighting strings, and which may be used in lighting circuits, for example such as that shown in figure 1, according to one or more embodiments. The controller comprises a PWM signal generator 210. The signal generator is configured to generate a respective PWM signal, for each of the plurality of LED lighting strings, each PWM signal having a frequency and a predetermined duty cycle. The controller comprises a frequency modulator 220 configured to adjust the frequency of each of the PWM signals to result in a respective modulated frequency. That is to say, PWM control signals PWM1, PWM2 and PWM3 output from the controller, have frequencies which derive from the frequency modulator 220. The frequency modulator is configured to adjust the frequency by a jitter, derived in the jitter module 230. The jitter is superposed on a regular repeating pattern, which varies more slowly than the jitter and is derived in an envelope shaper module 240. That is to say, the PWM-to-PWM cycle changes due to the jitter may be larger than the PWM-to-PWM cycle changes due to the pattern in the regular repeating pattern. The combination of the jitter and the regular repeating pattern results in a modulated frequency for each of the output PWM signals. The regular repeating patterns for the PWM signals are spaced apart in phase.

Figure 2(b) shows, in block form, a controller 250 for controlling a plurality of LEDs lighting strings, according to one or more embodiments and suitable for digital or software implementation; similar to the embodiment shown in figure 2(a), the controller 250 comprises a frequency modulator 220 which comprises a jitter module 230 and an envelope shaper module 240. The controller further comprises a PWM signal generator 210. In embodiments according to figure 2, the PWM signal generator takes as inputs the modulated frequency, output from the frequency modulator 220, and information representative of a duty cycle 215. As will be discussed in more detail below, the modulated frequency and information representative of duty cycle may each be, in digital software component implementations, simply a number stored in a register (not shown). The PWM signal generator may then synthesise the PWM control signal PWM1 from this information. The combination of frequency modulator and PWM signal generator 210 is replicated for each of the LED lighting strings, to provide separate PWM control signals PWM1, PWM2, and PWM3.

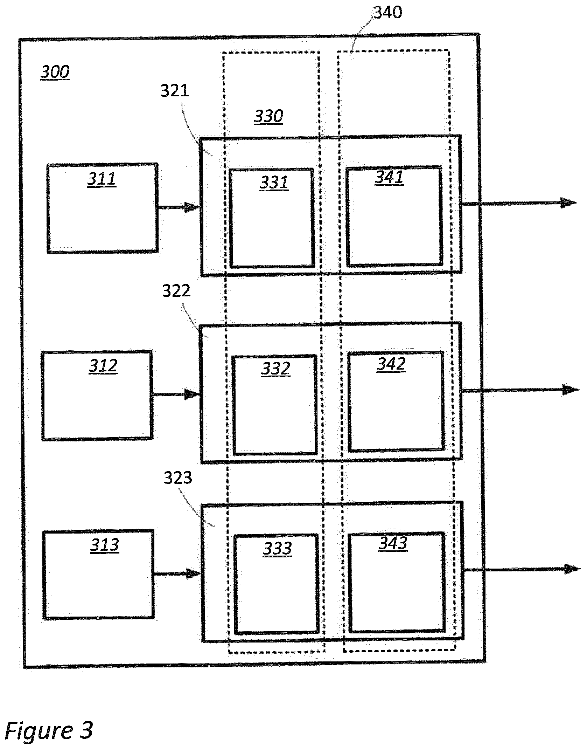

Figure 3 shows, in block form, another controller 300 for controlling a plurality of lighting strings, and which may be used in circuits, for example such as that shown in figure 1, according to one or more embodiments. In the embodiment depicted in this figure, a separate signal generator 311, 312 and 313 is provided for each Led lighting string. Each of the signal generators 311, 312, 313 provide a respective signal to corresponding jitter modules 331, 332 and 333, and envelope shaper modules 341, 342 and 343. Each jitter module and envelope shaper (331 and 341, 332 and 342, 333 and 343) forms a respective frequency adjustor modulator 321, 322, 323. The jitter modules 331, 332 and 333 together comprise a jitter unit 330, and the envelope shaper modules 341, 342 and 343 together comprise an envelope shaper unit 340.

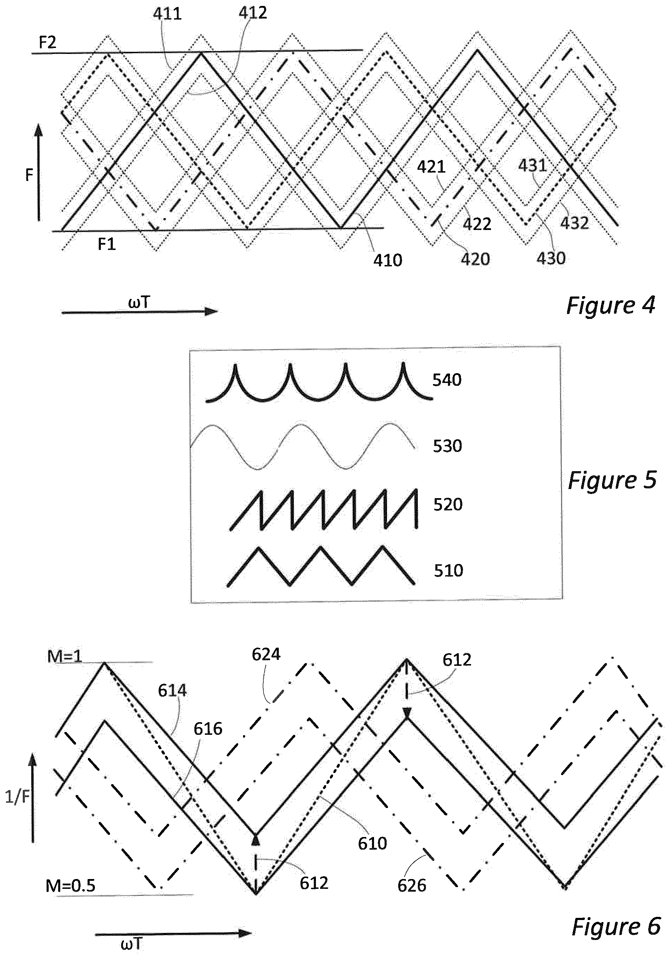

An example of frequency adjustment according to one or more embodiments is shown schematically in figure 4, which depicts, on the y-axis or ordinate, PWM switching frequency F for each of three LED strings, against time (ωT) on the x-axis or abscissa. The PWM frequency for each string is modified by a regular repeating pattern, shown as 410, 420 and 430, which in this case is a symmetrical triangular waveform.

Non-exhaustive examples of alternative regular repeating patterns, which may be used, are shown in figure 5. These include symmetrical triangular waveform 510, sawtooth waveform 520, sinusoidal waveform 530, and skewed triangular waveform 540.

Returning to figure 4, in one example, a jitter is superposed on the regular repeating pattern. The skilled person would appreciate that the jitter may take a regular, or a random, form. The frequency of any individual PWM cycle will thus not be that determined directly by the regular repeating pattern. Rather, the frequency might be either higher or lower than that shown by plot 410, 420 or 430 respectively. The actual frequency for the first string at any moment in time will fall within an envelope which is defined by an upper limit of 411 and a lower limit 412. The plot 411 follows the regular repeating pattern for 410, but is displaced upwards by the maximum allowable positive jitter. Conversely the plot 412 follows the regular repeating pattern 410, but is displaced downwards by the maximum allowable negative jitter. Similarly, the actual frequency for the second string will lie within an envelope between upper limit 421 and lower limit 422; the actual frequency for the third string will lie within an envelope between upper limit 431 and lower limit 432.

Figure 6 shows another example of frequency adjustment. This example is particularly suited to digital implementation. Instead of directly operating on the PWM frequency, the frequency adjustment is made by operating on its inverse - that is to say the period of an individual PWM cycle. So, instead of plotting frequency on the y-axis or ordinate against time (ωT) on the x-axis or abscissa, in figure 6 the PWM period (1/F) is plotted on the y-axis. In this particular example, the regular repeating pattern is a triangular waveform for the PWM period. The skilled person will appreciate that the corresponding regular pattern, when considered as a pattern in frequency, is a "skewed" or "concave" triangular waveform such as that shown in figure 5 at 540.

The period 1/F may conveniently be described and calculated using a modulation index M, which is a multiplier applied to a baseline period. Thus, when M=1, the multiplier is 1; when M=0.5, the multiplier is 0.5. Hence, considering a non-limiting example in which the modulation index varies between M=0.5 and M=1, the baseline (that is to say, minimum) frequency, when M=1, of 244Hz resulting in a baseline (that is to say maximum) period of 1/244s, the period varies between a maximum of (1)*(1/244) s, that is to say approximately 4.1ms, to a minimum of (0.5)*(1/244) s, that is to say, approximately 2.0ms.

Superposed on the regular repeating pattern is a jitter, which in this case is a random jitter with a value between 0 and 255, generated according to the random number generator. The jitter is superposed on the regular repeating pattern by means of an "exclusive-or" (XOR) function. As a result, the modulated PWM frequency always is within an envelope defined by the regular repeating pattern. In the case that the PWM frequency is represented by a number stored in a register, the XOR function is particularly straightforward - only the least significant bits of the frequency adjusted according to the regular repeating pattern are affected; the number of bits being affected being determined by the maximum allowable jitter.

The superimposition of the jitter is shown pictorially in figure 6, in which the regular repeating pattern is shown by dotted line 610, and the maximum allowable jitter is shown by dashed line 612. Due to the 'exclusive or' combination of these two adjustments, the frequency is never less than the minimum of the regular repeating pattern, and never more than the maximum of the regular repeating pattern. This is depicted pictorially by the negative arrowheads on lines 612. The frequency of any particular PWM cycle thus falls within the envelope defined by the 'exclusive or' (XOR) combination of the regular repeating pattern and the maximum allowable jitter, and with upper limit 614 and lower limit of 616 (solid lines in figure 6).

In the case of an RGB LED driver there would typically be three PWM signals. The envelope of the frequency of a second of these signals is shown in figure 6 by upper limit 624 and lower limit 626. For the purposes of clarity, the generators for the regular repeating pattern and the jitter are not shown. Similarly, in order to improve the clarity of the figure, neither the generators nor the envelope for a third frequency envelope are shown.

It will be observed that the envelopes for the first and second PWM frequencies, and the second and third PWM frequencies, have "phase" relationships which typically are fixed phase relationships.

Note that this does not refer to the phase of the PWM switching, but rather to the "phase" of the regular repeating pattern. Although this is not necessary, the skilled person will appreciate that by evenly spacing the phase of regular repeating pattern, the correlation between the PWM switching may be minimised. This may be beneficial for embodiments in which the power is supplied by a switch mode power supply (SMPS), since it may allow an evenly spread load for the SMPS, thereby reducing the ripple at its output. The skilled person will appreciate that, in the case that the jitter is truly random, there may be no absolutely fixed phase relationship between the phases. However, significantly varying phase relationship may result in the effect known as heterodyning, and this may in some circumstances reduce or compromise the stability of the observed colour of the RGB output. It may be possible to avoid this, by phase-locking the PWM frequency signals, to avoid such heterodyning. Such phase locking of course does not refer to the relative phase of each PWM cycle, but to the relative phase of the regular repeating pattern according to which frequency of the PWM signal is modulated.

In a typical non-limiting example, the maximum PWM frequency may be 488Hz, and the minimum frequency 244Hz, as discussed above. [The positive-peak to positive-peak time of the symmetrical triangular waveform (that is to say the period of the regular repeating pattern) in a typical example may be approximately 1/3 of a second]: Taking the above-mentioned case as an example, the average PWM period - that is to say midway between the minimum and maximum periods is (0.75)* (1/244) s = 3.1ms. If the regularly repeating pattern repeats over 128 PWM cycles (for example as ωT goes from 0 to 65535 in steps of 512), the regular repeating will have a repetition period of (3.1 ms)*(128) = 0.40s.

In an experimental setup of such an embodiment, the ripple at the output of the SMPS providing power to the LED strings has been found to halve from 4V to 2V, for LED strings operable at 18V

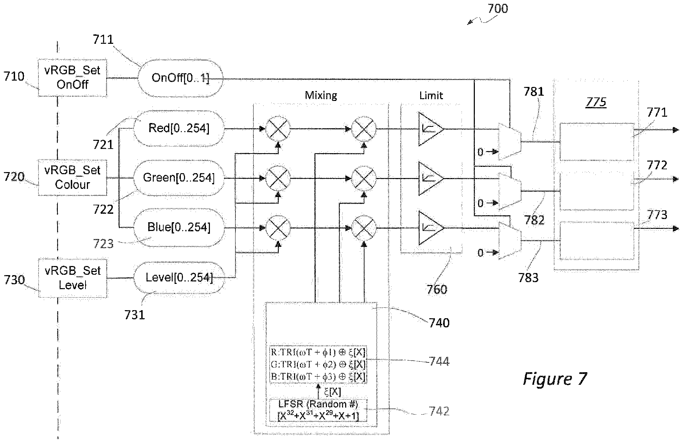

Figure 7 shows a schematic diagram of a circuit 700 for controlling a plurality of LED strings, according to one or more embodiments, in the context of an example application. The circuit may be implemented either in hardware or software, or a combination of both. In the case of software implementation, the controller may be partly or completely contained within a single integrated circuit such as a microcontroller chip. The controller has control inputs for the lighting circuit as follows: 710 for receiving an on-off signal (vRGB_SetOnOff), 720 for receiving a colour point signal (vRGB_SetColour), and 730 for receiving a level signal (vRGB_SetLevel). The controller converts signals at input 710, 720,730 into corresponding driver parameters as follows: 711: OnOff; 721: Red, 722: Green and 723: Blue; and 731: Level). For a typical 8-bit implementation used in conjunction with the Zigbee Cluster Library, each of these parameters may have a value between 0 and 254 - the skilled person will be familiar that the sentinel value 255 is forbidden in such applications. The red, green and blue parameters are mixed with the level parameter, in order to determine an appropriate mark-space ratio, or duty cycle, for each of the PWM signals corresponding to red, green and blue.

A spread spectrum controller 740 operates as a frequency adjuster or frequency modulator: the spread spectrum controller 740 comprises a random number generator 742 for providing jitter, which is combined by Boolean XOR logic with a triangular function TRI(x) (as shown as 744). The triangular function - which in this instance is the regular repeating pattern - has period 2πT and thus frequency 1/ 2πT, and the patterns for the green and blue are offset by 2πT/3 and 4πT/3 respectively from the "red" pattern. In software-based embodiments, the spread spectrum controller may be implemented as an Interrupt Service Routine (ISR).

For example and without limitation, the random number generator may be a 9-bit truncation of a 32-bit maximal period Galois LFSR (linear feedback shift register) polynomial of the form X³² + X³¹ + X²⁹ + X + 1. Such a random number generator provides a 9-bit random number (i.e. a number between 0 and 255), with a generally uniform distribution. Other alternative implementations of random number generators which may be used will be familiar to the skilled person.

The output from the spread spectrum controller for each colour string is mixed with the driver parameter 721, 722 or 723 respectively, and passed to a limiter 760 in order to ensure that the appropriate LED string is not over- driven. An over-driven LED string may be one in which the average current is higher than that recommended for the one or more LEDs in the string. The outputs of the limited 760 are each combined (through Boolean "AND" logic) with the set_OnOff signal 711, before being passed as input 781, 782 or 783 to a respective red, green or blue timer block 771 ,772 or 773. The timer blocks generate respective PWM signals and implement the frequency adjustment according to the inputs 781, 782 and 783.

In one or more example embodiments the timer blocks 771, 772 and 773 are implemented in software, and are at least a part of the on-chip peripherals 775.

They may include registers - for example 16-bit registers - for storing, for each string, information indicative or representative of the PWM frequency, and the PWM duty cycle. A CPU (Central processor unit), may determine the information, for instance from the driver parameters 711, 721-723, 731 and the spread spectrum controller ISR. In such an embodiment, the duty cycle and one of the PWM frequency or PWM period, may thus be represented by a number between 0 and 65535. By extension, in embodiments in which the timer blocks are implemented in software using 24-bit registers, the PWM duty cycles and either PWM frequencies or PWM periods may be represented by a number between 0 and 16777215 (2²⁴-1).

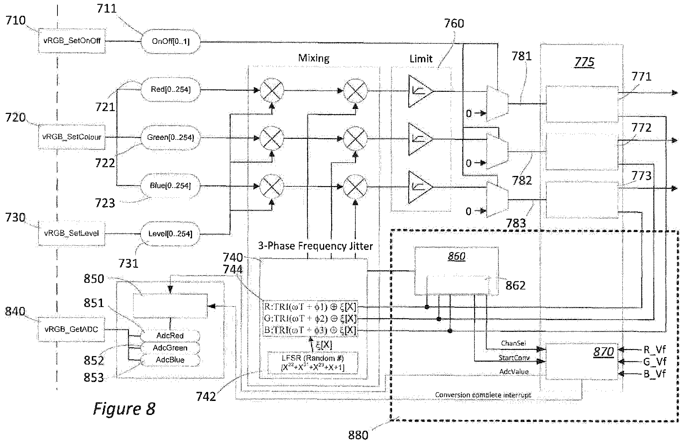

Figure 8 shows a schematic diagram of a circuit for controlling a plurality of LED strings, according to one or more embodiments and incorporating a sensorless temperature sensing functionality. Most of the functionality of the embodiment shown in figure 8 is the same or similar as that described above with reference to figure 7 with the exception that the, the circuit shown in figure 8 includes a further control input "GetADC" 840, which recieves driver parameters AdcRed 851, AdcGreen 852 and AdcBlue 853, based on the output of a "conversion complete" interrupt service routine (ISR) 850. An ADC Timing block 860 is passed the PWM outputs of each of the timer blocks 771, 772 and 773. The ADC timing block 860 includes a scheduling algorithm, and determines a period when none of the RGB channel PWM signals are high, and checks that this period is long enough to make a "quiescent" measurement. A "quiescent" measurement of the relevant LED or LED string may then made by passing a small current through the LED or LED string, and determining the forward voltage across it (R-Vf, G_Vf, or B_Vf, for respectively the red, green and blue channels), as is described in US patent publications US8278831, and US8368505, in order to determine an operating characteristic such as temperature, of the LED or LED string. The forward voltage (R-Vf, G_Vf, or B_Vf) is converted to a digital signal in an Analog-to-Digital Converter (ADC) 870, at the end of the Settle period determined by the settle times 862. The ADC Timing block 860 and ADC 870 may form a logical "Conversion Complete" interrupt 880.

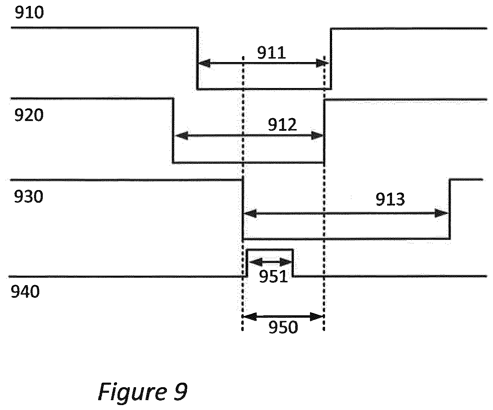

Figure 9 shows, schematically, an example of the timing of the senseless sensing functionality. The figure shows expanded of the PWM signals 910, 920 and 930, for each of three channels. The PWM frequencies of the three channels are different, as shown by the different durations, 911, 912, 913 of the three "off" periods of their duty cycles. To avoid crosstalk from the other channels, it is preferable that the quiescent measurement of any one of the channels is made during a time when the other channels are also off - that is to say, during period 950. The lower trace 940 shows the output of the scheduling algorithm. The algorithm determines that it is possible to schedule a quiescent measurement - that is, measurement of the forward voltage Vf for a low, nearly-off, current, during only a first part 951 of the window 950. It would not be appropriate to schedule a quiescent measurement during the latter part of the window, due to the length of time required for the measurement.

Thus by introducing partially-controlled randomness into the PWM frequency for each of the PWM control signals according to one more embodiments such as those described above, it may be possible to conveniently schedule measurements for senseless sensing functionality with a high reliability and avoid being crosstalk, without requiring significant additional complexity.

List of reference symbols:
- 100: lighting circuit
- 110: AC mains
- 115: rectifier
- 120: DC-DC converter
- 125: microcontroller
- 131, 132, 133: LED driver
- 141, 142, 143: LED string
- 200: lighting circuit
- 210: PWM signal generator
- 215: information representative of duty cycle
- 220: frequency modulator
- 230: jitter module
- 240: envelope shaper u
- 300: controller
- 311, 312, 313: signal generator
- 321, 322, 323: frequency adjustor modulator
- 330: jitter unit
- 331, 332, 333: jitter module
- 340: envelope shaper unit
- 341, 342, 343: envelope shaper module
- 410, 420, 430: regular repeating pattern
- 411, 421, 431: upper limit
- 412, 422, 432: lower limit
- 510: triangular waveform
- 520: sawtooth waveform
- 530: sinusoidal waveform
- 540: skewed triangular waveform
- 610: regular repeating pattern
- 612: maximum allowable jitter
- 614, 624: upper limit
- 616, 626: lower limit
- 700: circuit 700
- 710: onoff control input
- 711: OnOff driver parameter
- 720: colour point signal control input
- 721: red driver parameter
- 722: green driver parameter
- 723: Blue driver parameter
- 730: level signal control input
- 731: Level drive parameter
- 740: spread spectrum controller
- 742: random number generator
- 744: triangular function TRI()
- 760: limiter
- 771: red timer block
- 772: green timer block
- 773: blue timer block
- 775: on-chip peripherals
- 781: input to red timer block
- 782: input to green timer block
- 783: input to blue timer block
- 840: GetADC control input
- 850: conversion complete ISR
- 851: AdcRed driver parameter
- 852: AdcGreen driver parameter
- 853: AdcBlue driver parameter
- 860: ADC Timing block 860
- 862: Settle times
- 870: ADC
- 880: "Conversion Complete" interrupt
- 910, 920, 930: PWM signals
- 911, 912, 913: PWM signal "off" periods
- 940: scheduling algorithm output
- 950: quiescent period
- 951: scheduling algorithm output high period

## Claims

1. A controller (200) for controlling a plurality of LED lighting strings,
the controller comprising, for each of the plurality of LED lighting strings:
a frequency modulator (220) configured to:
(i) modulate a baseline frequency with a regular repeating pattern; and,
(ii) modulate the baseline frequency with a jitter superposed on the regular repeating pattern (510, 520, 530), the regular repeating pattern varying more slowly than the jitter, to result in a time-varying modulated frequency; and
a PWM signal generator (210) configured to generate a PWM signal having the time-varying modulated frequency and a predetermined duty cycle; wherein the regular repeating patterns in each of the frequency modulators (220) for each of the PWM signals are spaced apart in phase with respect to each other.

2. A controller (200) as claimed in claim 1, wherein the jitter is random.

3. A controller (200) as claimed in claim 1 or 2, wherein each frequency modulator (220) comprises:
a jitter module (230) configured to adjust the respective baseline frequency by a random amount; and
an envelope shaper module (240) configured to adjust the respective baseline frequency according to a regular repeating pattern, operable in combination with the jitter module.

4. A controller (200) as claimed in claim 3, wherein each envelope shaper (240) is configured to adjust the respective baseline frequency by the same regular repeating pattern.

5. A controller (200) as in any preceding claim, wherein each regular repeating pattern has the same pattern that is one of:
a triangular pattern; or
a sinusoidal pattern; or
a saw-tooth pattern.

6. A controller (200) as claimed in any preceding claim, wherein the regular repeating pattern for different PWM signals are evenly spaced apart in phase.

7. A controller (200) as claimed in any preceding claim, further comprising a phase-lock circuit to lock the phases of the regular repeating pattern for different PWM signals.

8. A driver for driving a plurality of LEDs lighting strings, comprising a controller (200) as claimed in any preceding claim, and a plurality of power switches, each configured to be switched according to the respective PWM signal.

9. A driver as claimed in claim 8, further comprising a measuring unit, configured to determine a period of time when none of the PWM signals are high, and to measure a characteristic of a one of the LED lighting strings within the period.

10. A driver as claimed in claim 9, wherein the characteristic is temperature.

11. A lighting circuit comprising a driver as claimed in any one of claims 8, 9 or 10 and further comprising the plurality of LED lighting strings.

12. A method of controlling a plurality of LED lighting strings, the method comprising, for each of the plurality of LED lighting strings:
modulating a baseline frequency by a regular repeating pattern,
modulating the baseline frequency by a jitter superposed on the regular repeating pattern (510, 520, 530), the regular repeating pattern varying more slowly than the jitter, to result in a time-varying modulated frequency; and
generating a PWM signal having the time-varying modulated frequency and a predetermined duty cycle;
wherein the regular repeating patterns for each of the PWM signals are spaced apart in phase with respect to each other.

13. The method of claim 12, wherein the jitter is random.

14. The method of claim 12 or 13, wherein each regular repeating pattern (510, 520, 530) is the same regular repeating pattern.

15. The method of any of claims 12 to 14, further comprising determining a period of time when none of the PWM signals are high, and measuring a characteristic of a one of the LED lighting strings within the period.

## Patentansprüche

1. Ein Controller (200) zum Steuern einer Vielzahl von LED Leuchtsträngen, wobei der Controller für jede der Vielzahl von LED Leuchtsträngen aufweist:
einen Frequenzmodulator (220), der konfiguriert ist zu:
(i) modulieren eine Basislinien-Frequenz mit einem regulären, sich wiederholenden Muster; und
(ii) modulieren die Basislinien-Frequenz mit einem Jitter, der dem regulären, sich wiederholenden Muster (510, 520, 530) überlagert wird, wobei das reguläre, sich wiederholende Muster langsamer variiert als der Jitter, um eine zeitveränderliche modulierte Frequenz zu ergeben; und
einen PWM Signalerzeuger (210), der konfiguriert ist, ein PWM Signal zu erzeugen, das eine zeitveränderliche modulierte Frequenz und ein vorgegebenes Tastverhältnis hat;
wobei die regulären, sich wiederholenden Muster in jedem der Frequenzmodulatoren (220) für jedes der PWM Signale zueinander phasenversetzt sind.

2. Ein Controller (200) gemäß Anspruch 1, wobei der Jitter zufällig ist.

3. Ein Controller (200) gemäß Anspruch 1 oder 2, wobei jeder Frequenzmodulator (220) aufweist:
ein Jittermodul (230), das konfiguriert ist, die entsprechende Basislinien-Frequenz um einen zufälligen Betrag anzupassen; und
ein Hüllkurvenformer Modul (240), das konfiguriert ist, die entsprechende Basislinien-Frequenz gemäß einem regulären, sich wiederholenden Muster anzupassen, welches in Kombination mit dem Jittermodul betreibbar ist.

4. Ein Controller (200) gemäß Anspruch 3, wobei jeder Hüllkurvenformer (240) konfiguriert ist, die entsprechende Basislinien-Frequenz durch dasselbe reguläre, sich wiederholende Muster anzupassen.

5. Ein Controller (200) gemäß einem vorherigen Anspruch, wobei jedes reguläre, sich wiederholende Muster dasselbe Muster hat, welches eines ist von:
einem dreieckigen Muster; oder
einem sinusförmigen Muster; oder
einem Sägezahn Muster.

6. Ein Controller (200) gemäß einem vorherigen Anspruch, wobei das reguläre, sich wiederholende Muster für unterschiedliche PWM Signale gleichmäßig phasenversetzt ist.

7. Ein Controller (200) gemäß einem vorherigen Anspruch, ferner aufweisend eine Phasenregelschaltung, um die Phasen des regulären, sich wiederholenden Musters für unterschiedliche PWM Signale zu regeln.

8. Ein Treiber zum Treiben einer Vielzahl von LEDs Leuchtsträngen, aufweisend einen Controller (200) gemäß einem vorherigen Anspruch und eine Vielzahl von Leistungsschaltern, die jeweils konfiguriert sind, gemäß dem entsprechenden PWM Signal geschaltet zu werden.

9. Ein Treiber gemäß Anspruch 8, ferner aufweisend eine Messeinheit, die konfiguriert ist, eine Zeitdauer zu bestimmen, wenn keines der PWM Signale groß ist, und eine Eigenschaft von einem der LED Leuchtstränge innerhalb der Dauer zu messen.

10. Ein Treiber gemäß Anspruch 9, wobei die Eigenschaft Temperatur ist.

11. Eine Leuchtschaltung aufweisend einen Treiber gemäß einem der Ansprüche 8, 9 oder 10 und ferner aufweisend die Vielzahl von LED Leuchtsträngen.

12. Ein Verfahren zum Steuern einer Vielzahl von LED Leuchtsträngen, das Verfahren aufweisend für jeden aus der Vielzahl von LED Leuchtsträngen:
Modulieren einer Basislinien-Frequenz mit einem regulären, sich wiederholenden Muster,
Modulieren der Basislinien-Frequenz mit einem Jitter, der dem regulären, sich wiederholenden Muster (510, 520, 530) überlagert wird, wobei das reguläre, sich wiederholende Muster langsamer variiert als der Jitter, um eine zeitveränderliche modulierte Frequenz zu ergeben; und
Erzeugen eines PWM Signals, das die zeitveränderliche, modulierte Frequenz und ein vorgegebenes Tastverhältnis hat;
wobei die regulären, sich wiederholenden Muster für jedes der PWM Signale zueinander phasenversetzt sind.

13. Das Verfahren gemäß Anspruch 12, wobei der Jitter zufällig ist.

14. Das Verfahren gemäß Anspruch 12 oder 13, wobei jedes reguläre, sich wiederholende Muster (510, 520, 530) dasselbe reguläre, sich wiederholende Muster ist.

15. Das Verfahren gemäß einem der Ansprüche 12 bis 14, ferner aufweisend ein Bestimmen einer Zeitdauer, wenn keines der PWM Signale groß ist, und ein Messen einer Eigenschaft von einem der LED Leuchtstränge innerhalb der Dauer.

## Revendications

1. Contrôleur (200) pour contrôler une pluralité de chaînes d'éclairage LED, le contrôleur comprenant, pour chacune de la pluralité de chaînes d'éclairage LED :
un modulateur de fréquence (220) configuré pour :
(i) moduler une fréquence de base avec un motif répétitif régulier ; et
(ii) moduler la fréquence de base avec une gigue superposée au motif répétitif régulier (510, 520, 530), le motif répétitif régulier variant plus lentement que la gigue, pour obtenir une fréquence modulée variant dans le temps ; et
un générateur de signal PWM (210) configuré pour générer un signal PWM ayant la fréquence modulée variant dans le temps et un cycle de service prédéterminé ;
où les motifs répétitifs réguliers dans chacun des modulateurs de fréquence (220) pour chacun des signaux PWM sont espacés en phase les uns par rapport aux autres.

2. Contrôleur (200) tel que revendiqué dans la revendication 1, dans lequel la gigue est aléatoire.

3. Contrôleur (200) tel que revendiqué dans la revendication 1 ou la revendication 2, dans lequel chaque modulateur de fréquence (220) comprend :
un module de gigue (230) configuré pour ajuster la fréquence de base respective d'une quantité aléatoire ; et
un module de mise en forme d'enveloppe (240) configuré pour ajuster la fréquence de base respective selon un motif répétitif régulier, utilisable en combinaison avec le module de gigue.

4. Contrôleur (200) tel que revendiqué dans la revendication 3, dans lequel chaque dispositif de mise en forme d'enveloppe (240) est configuré pour ajuster la fréquence de base respective au moyen du même motif répétitif régulier.

5. Contrôleur (200) tel que revendiqué dans l'une quelconque des revendications précédentes, dans lequel chaque motif répétitif régulier a le même motif qui est l'un des motifs suivants :
un motif triangulaire ; ou
un motif sinusoïdal ; ou
un motif en dents de scie.

6. Contrôleur (200) tel que revendiqué dans l'une quelconque des revendications précédentes, dans lequel le motif répétitif régulier pour différents signaux PWM est espacé en phase de manière égale.

7. Contrôleur (200) tel que revendiqué dans l'une quelconque des revendications précédentes, comprenant en outre un circuit à verrouillage de phase pour verrouiller les phases du motif répétitif régulier pour différents signaux PWM.

8. Circuit d'attaque pour commander une pluralité de chaînes d'éclairage LED, comprenant un contrôleur (200) tel que revendiqué dans l'une quelconque des revendications précédentes, et une pluralité d'interrupteurs de puissance, chacun étant configuré pour être commuté en fonction du signal PWM respectif.

9. Circuit d'attaque tel que revendiqué dans la revendication 8, comprenant en outre une unité de mesure, configurée pour déterminer une période de temps pendant laquelle aucun des signaux PWM n'est élevé, et pour mesurer une caractéristique d'une des chaînes d'éclairage LED au cours de la période.

10. Circuit d'attaque tel que revendiqué dans la revendication 9, dans lequel la caractéristique est la température.

11. Circuit d'éclairage comprenant un circuit d'attaque tel que revendiqué dans l'une quelconque des revendications 8, 9 ou 10, et comprenant en outre la pluralité de chaînes d'éclairage LED.

12. Procédé de contrôle d'une pluralité de chaînes d'éclairage LED, le procédé comprenant, pour chacune de la pluralité de chaînes d'éclairage LED, les étapes suivantes :
moduler une fréquence de base avec un motif répétitif régulier,
moduler la fréquence de base avec une gigue superposée au motif répétitif régulier (510, 520, 530), le motif répétitif régulier variant plus lentement que la gigue, pour obtenir une fréquence modulée variant dans le temps ; et
générer un signal PWM ayant la fréquence modulée variant dans le temps et un cycle de service prédéterminé ;
où les motifs répétitifs réguliers pour chacun des signaux PWM sont espacés en phase les uns par rapport aux autres.

13. Procédé selon la revendication 12, dans lequel la gigue est aléatoire.

14. Procédé selon la revendication 12 ou la revendication 13, dans lequel chaque motif répétitif régulier (510, 520, 530) est le même motif répétitif régulier.

15. Procédé selon l'une quelconque des revendications 12 à 14, comprenant en outre de déterminer une période de temps pendant laquelle aucun des signaux PWM n'est élevé, et de mesurer une caractéristique d'une des chaînes d'éclairage LED au cours de la période.
